# EUROPEAN PATENT APPLICATION

(11) **EP 4 657 870 A1**
(43) Date of publication of application: **03.12.2025**
(21) Application number: 24857642.3
(22) Date of filing: 23.02.2024
(51) Int. Cl.: H04N 23/60

(54) **IMAGE PROCESSING METHOD AND ELECTRONIC DEVICE**

(30) Priority: 29.08.2023 CN 202311103023; 08.09.2023 CN 202311165317
(71) Applicant: Huawei Technologies Co., Ltd., Shenzhen, Guangdong 518129 (CN)
(72) Inventor: HU, Xiangyu, Shenzhen, Guangdong 518129 (CN); WEN, Jinsong, Shenzhen, Guangdong 518129 (CN); CHEN, Min, Shenzhen, Guangdong 518129 (CN); CHEN, Yuanlin, Shenzhen, Guangdong 518129 (CN); JIA, Yanbing, Shenzhen, Guangdong 518129 (CN); DAI, Jun, Shenzhen, Guangdong 518129 (CN); WEI, Zhe, Shenzhen, Guangdong 518129 (CN); WU, Huajingling, Shenzhen, Guangdong 518129 (CN)
(74) Representative: MERH-IP Matias Erny Reichl Hoffmann Patentanwälte PartG mbB
(86) International application number: PCT/CN2024/078284
(87) International publication number: WO 2025/044086

(57) **Abstract**

Embodiments of this application provide an image processing method and an electronic device. The method includes: in response to an operation of capturing a first image by a user via a first terminal device, encoding the first image to obtain a first encoded file; sending the first encoded file to a server when a first operation of the user is detected and/or the first terminal device meets a first condition; and receiving a second image sent by the server, where the second image is obtained by the server by performing cloud enhancement processing on the first image in the first encoded file. According to the method and the electronic device, transmission to cloud in a case in which a terminal device is heavily loaded or overheated, or is in a poor network condition can be avoided.

## Description

This application claims priority to Chinese Patent Application No. 202311165317.6, filed with the China National Intellectual Property Administration on September 8, 2023 and entitled "IMAGE PROCESSING METHOD AND ELECTRONIC DEVICE", which is incorporated herein by reference in its entirety.

This application claims priority to Chinese Patent Application No. 202311103023.0, filed with the China National Intellectual Property Administration on August 29, 2023 and entitled "IMAGE PROCESSING METHOD AND ELECTRONIC DEVICE", which is incorporated herein by reference in its entirety.

### TECHNICAL FIELD

Embodiments of this application relate to the image processing field, and more specifically, to an image processing method and an electronic device.

### BACKGROUND

In an existing device camera system, after a sensor captures a raw image, an image signal processor (image signal processor, ISP) in a device performs a series of processing to obtain a YUV image or an RGB image, then uses different post-processing algorithms based on scenarios, and finally obtains a processed color image for a user to view.

However, for some devices with high integration, for example, mobile devices such as mobile phones and tablet computers, performance of processors is limited by sizes and power consumption, and consequently image processing effect is affected.

### SUMMARY

This application provides an image processing method and an electronic device. According to the method and the electronic device, transmission to cloud in a case in which a terminal device is heavily loaded or overheated, or is in a poor network condition can be avoided, so that cases such as excessively high load and overheating caused by the transmission to cloud of the terminal device can be avoided, and a failure of the transmission to cloud due to the poor network condition can also be avoided. This improves load balance in a process of using the terminal device, and increases a success rate of the transmission to cloud in the process of using of the terminal device.

According to a first aspect, an image processing method is provided. The method includes: in response to an operation of capturing a first image by a user via a first terminal device, encoding the first image to obtain a first encoded file; sending the first encoded file to a server when a first operation of the user is detected and/or the first terminal device meets a first condition; and receiving a second image sent by the server, where the second image is obtained by the server by performing cloud enhancement processing on the first image in the first encoded file.

Optionally, the first condition includes any one or more of the following conditions: current load of the first terminal device is less than a first load threshold, a current temperature of the first terminal device is less than a first temperature threshold, and a current network signal of the first terminal device is greater than a first signal threshold.

In some embodiments, the first image includes a raw image.

Encoding the first image can save storage space and facilitate sending.

The operation of capturing the first image by the user via the first terminal device may be, for example, a photographing operation of the user, or may be a video recording operation of the user.

In some embodiments, the first load threshold may be, for example, any load value between 50% and 100%, for example, 60%. The first temperature threshold may be, for example, any temperature between 37°C and 70°C, for example, 45°C. The first signal threshold may be, for example, any signal value between -85 DB and 105 DB. For example, a network signal of 95 DB is above -100 DB.

The cloud enhancement processing may include, for example, overall cloud enhancement performed by the server on the first image, and may be, for example, noise reduction processing, high dynamic processing, or wide-aperture blurring processing performed by cloud on the first image.

In some embodiments, the first encoded file further includes first information related to the encoded first image, the first information may be, for example, metadata for the first image, and the first information is used by the server to perform cloud enhancement processing on the first image based on the first information.

In this embodiment of this application, when the cloud enhancement processing needs to be performed on the first image captured by the terminal device, transmission to cloud is not immediately started after the first image is captured, and is started in response to an operation of confirming the transmission to cloud by the user, or transmission to cloud is automatically started when the current load, the current temperature, and a current network condition of the terminal device meet a condition of the transmission to cloud. In this way, the transmission to cloud in a case in which the terminal device is heavily loaded or overheated, or is in a poor network condition can be avoided, so that cases such as excessively high load and overheating caused by the transmission to cloud of the terminal device can be avoided, and a failure of the transmission to cloud due to the poor network condition can also be avoided. This improves load balance in a process of using the terminal device, and increases a success rate of the transmission to cloud in the process of using the terminal device.

With reference to the first aspect, in a possible implementation, before sending the first encoded file to the server, the method further includes: displaying a first interface on a display of the first terminal device in response to a second operation of the user, where the first interface includes a first preview image and a first icon, and the first preview image is a gallery preview image corresponding to the first image. The first operation of the user includes an operation of tapping the first icon by the user.

The first interface is a display interface of the first preview image. After completing photographing, the user may enter the display interface of the first preview image through an operation of tapping a gallery preview control on a photographing interface. Alternatively, the user may enter a gallery of the first terminal device by tapping the gallery application on the desktop, and further enter the display interface of the first preview image by tapping a target preview image.

The first preview image is a gallery preview image obtained by performing preprocessing by the first terminal device, and the operation is performed before the first image is encoded.

In this embodiment of this application, a manner in which the user manually determines transmission to cloud is provided. After the user completes photographing, if the image is an image that requires cloud enhancement processing, a gallery preview image corresponding to the image is stored in a gallery of an electronic device, and the user may trigger an operation of the transmission to cloud by tapping a cloud enhancement icon on a gallery preview image interface.

With reference to the first aspect, in a possible implementation, the first interface further includes a first selection control. The method further includes: when the user selects a first enhancement degree via the first selection control, first information is carried in the first encoded file, where the first information indicates that a degree of portrait enhancement performed by the server on the first image is the first enhancement degree, and the cloud enhancement processing includes the portrait enhancement.

In some examples, the cloud enhancement processing performed by the server on the first image includes first cloud enhancement processing and second cloud enhancement processing. The first cloud enhancement processing is basic cloud enhancement processing, and may include, for example, noise reduction processing, high dynamic processing, or wide-aperture blurring processing. The second cloud enhancement processing is portrait enhancement processing, and is portrait enhancement processing based on the first cloud enhancement processing.

In some embodiments, a second cloud enhancement processing degree is classified into levels 0 to 10 based on an enhancement level. A higher level indicates a higher second cloud enhancement processing degree. For example, when a level corresponding to the second cloud enhancement processing is 0, it indicates that the second cloud enhancement processing is not performed.

In some embodiments, a second encoded file is further sent to the server. The second encoded file may include information indicating a second cloud enhancement degree selected by the user, and may further include an intermediate result of algorithm processing corresponding to the first image, for example, a preview YUV image before and after photographing and a JPG image obtained through algorithm processing on the first image.

In some embodiments, after obtaining the second image, the user may separately view, via the first terminal device, an image obtained through only the first cloud enhancement processing and an image obtained through the first cloud enhancement processing and the second cloud enhancement processing, and the user may select a to-be-stored image from the images as will.

In this embodiment of this application, before performing the cloud enhancement processing on the image, the user may select the second cloud enhancement processing degree of the image. In this way, the user can obtain image effect that better meets an expectation.

With reference to the first aspect, in a possible implementation, in response to the operation of capturing the first image by the user via the first terminal device, encoding the first image to obtain the first encoded file includes: determining, based on a current photographing scene, whether to enter a cloud enhancement mode, where the server needs to perform cloud enhancement processing on the first image in the cloud enhancement mode; and when it is determined to enter the cloud enhancement mode, in response to the operation of capturing the first image by the user via the first terminal device, encoding the first image to obtain the first encoded file.

In this embodiment of this application, cloud enhancement processing is not required for first images captured in all scenes. For example, cloud enhancement processing is not required when there is no portrait in a preview image, or light in a current scene is sufficient. In this embodiment, the terminal device can determine, based on the current scene, whether to enter the cloud enhancement mode. This can avoid unnecessary image enhancement processing, thereby reducing power consumption overheads of the terminal device.

With reference to the first aspect, in a possible implementation, determining, based on the current photographing scene, whether to enter the cloud enhancement mode includes: determining, based on the current photographing scene and the current load of the first terminal device and/or the current temperature of the first terminal device, whether to enter the cloud enhancement mode; and when the current load of the first terminal device is greater than the first load threshold and/or the current temperature of the first terminal device is greater than the first temperature threshold, determining not to enter the cloud enhancement mode.

In other words, the current load of the first terminal device and/or the current temperature of the first terminal device are/is determined in response to a photographing operation of the user. When the current load of the first terminal device is greater than the first load threshold and/or the current temperature of the first terminal device is greater than the first temperature threshold, whether to enter the cloud enhancement mode is further determined based on the current photographing scene.

In this embodiment of this application, at a moment at which the user performs photographing, if the load or the temperature of the terminal device is excessively high, regardless of whether the current photographing scene meets a condition for entering the cloud enhancement mode, the terminal device does not enter the cloud enhancement mode, the captured first image is not transmitted to the cloud for processing, and ISP processing and post-processing are performed at a local side of the terminal device. In this way, the load balance in the process of using the terminal device can be further improved.

With reference to the first aspect, in a possible implementation, determining, based on the current photographing scene, whether to enter the cloud enhancement mode includes: obtaining a preview image corresponding to the current photographing scene; and when it is detected that a first portrait exists in the preview image, and the first portrait meets a second condition, determining to enter the cloud enhancement mode.

The second condition may be that confidence of the first portrait is higher than first confidence, and/or a quality score of the first portrait is less than a first score. Alternatively, the second condition may be, when confidence of the first portrait is higher than first confidence and/or a quality score of the first portrait is less than a first score and greater than a second score, determining to enter the cloud enhancement mode. The second score is less than the first score.

The confidence of the first portrait is confidence at which the first portrait is a real portrait.

The preview image corresponding to the current photographing scene may be an image in a viewfinder frame on a photographing interface of the first terminal device in the current photographing scene, or may be an image in a viewfinder frame on a photographing interface corresponding to a case in which the user presses a photographing key.

It may be understood that, in an example, if the confidence of the first portrait is higher than the first confidence, and/or the quality score of the first portrait is less than the first score, it indicates that display effect of the first image obtained in the photographing scene can be improved through cloud enhancement processing.

It may be further understood that, in an example, if the confidence of the first portrait is higher than the first confidence, and/or the quality score of the first portrait is less than the first score and greater than the second score, it indicates that the display effect of the first image obtained in the photographing scene can be improved through cloud enhancement processing.

In this embodiment of this application, it is determined to enter the cloud enhancement mode only when it is detected that the portrait exists in the preview image and display effect of the portrait can be improved through cloud enhancement processing. This can avoid unnecessary image enhancement processing, thereby further reducing power consumption overheads of the terminal device.

With reference to the first aspect, in a possible implementation, an area ratio of the first portrait in the preview image is greater than a first area ratio and less than a second area ratio.

It may be understood that, in an example, if the confidence of the first portrait is higher than the first confidence, and/or the quality score of the first portrait is less than the first score, and a size of the first portrait is moderate, it indicates that the display effect of the first image obtained in the photographing scene can be improved through cloud enhancement processing.

It may be understood that, in an example, if the confidence of the first portrait is higher than the first confidence, and/or the quality score of the first portrait is less than the first score and greater than the second score, and the size of the first portrait is moderate, it indicates that the display effect of the first image obtained in the photographing scene can be improved through cloud enhancement processing.

In this embodiment of this application, it is determined to enter the cloud enhancement mode only when it is detected that the portrait exists in the preview image and display effect of the portrait can be improved through cloud enhancement processing. This can avoid unnecessary image enhancement processing, thereby further reducing power consumption overheads of the terminal device.

With reference to the first aspect, in a possible implementation, determining, based on the current photographing scene, whether to enter the cloud enhancement mode includes: obtaining a preview image corresponding to the current photographing scene; and when it is determined, based on the preview image, that the current scene is a high dynamic scene, determining to enter the cloud enhancement mode; or when it is determined, based on the preview image, that brightness of the current scene is less than first brightness, determining to enter the cloud enhancement mode.

With reference to the first aspect, in a possible implementation, in response to the operation of capturing the first image by the user via the first terminal device, encoding the first image to obtain the first encoded file includes: when it is detected that a current photographing mode is a cloud camera mode, a portrait mode, or a wide-aperture mode, in response to the operation of capturing the first image by the user via the first terminal device, encoding the first image to obtain the first encoded file.

With reference to the first aspect, in a possible implementation, the method further includes: if the second image sent by the server is not received within a first time threshold, decoding the first encoded file to obtain the first image; and performing third processing on the first image to obtain a fourth image, where a timing start moment of the first time threshold is a moment at which the first encoded file is sent to the server, and the third processing includes image signal processor ISP processing and post-processing.

Before the first encoded file is sent to the server, the first encoded file is stored.

In an example, the third processing may include noise reduction processing, high dynamic processing, or wide-aperture blurring processing.

In this embodiment of this application, in a process in which the terminal device performs cloud enhancement processing, before sending the encoded file to the server, the terminal device backs up and stores the encoded file at the local end. When the terminal device does not receive, within a specified period, a processed image sent by the server, the terminal device can restart an image processing procedure on the local side, and further processing is performed on the image at the local end based on the encoded file that is backed up and stored. In this way, a high-quality image can be obtained in a timely manner in the poor network condition. This can improve user experience.

With reference to the first aspect, in a possible implementation, the method further includes: when determining not to enter the cloud enhancement mode, in response to the operation of capturing the first image by the user via the first terminal device, performing third processing on the first image to obtain a fourth image, where the third processing includes image signal processor ISP processing and post-processing.

In this embodiment of this application, when it is determined that the current scene is a scene in which the terminal device does not enter the cloud enhancement mode, the captured first image is not transmitted to the cloud for processing, and the terminal device performs a series of processing on the captured first image at the local end. In this way, encoding, compression, transmission to cloud, and the like do not need to be performed on the raw image. This can avoid some unnecessary power consumption overheads of the terminal device, thereby improving running performance of the terminal device, and prolonging a battery life of the terminal device.

With reference to the first aspect, in a possible implementation, the method further includes: sending a request message to the server, where the request message is used to request to obtain a target image stored in the server; and receiving an image that is sent by the server and that is obtained by adjusting the target image based on device information of the first terminal device.

In this embodiment of this application, the server can adjust, based on the device information of the requesting terminal device, an image obtained through cloud enhancement, so that an image finally obtained by the terminal device is an image that matches the device information of the terminal device. This can improve display effect of the image on the terminal device side.

According to a second aspect, an image processing method is provided. The method includes: receiving a first encoded file sent by a first terminal device, where the first encoded file includes an encoded first image; decoding the first encoded file to obtain the first image; performing cloud enhancement processing on the first image to obtain a second image; and sending the second image to the first terminal device.

In this embodiment of this application, after receiving the first image sent by the terminal device, a server can perform cloud enhancement processing on the first image, and return an image obtained through cloud enhancement to the terminal device after processing is completed. Due to high processing performance of the server, display effect of the processed image obtained by the terminal device can be better.

With reference to the second aspect, in a possible implementation, before sending the second image to the first terminal device, the method further includes: obtaining a first enhancement degree selected by a user; and performing portrait enhancement processing on the second image based on the first enhancement degree.

In this embodiment of this application, after performing basic cloud enhancement processing on the first image, the server may further perform portrait cloud enhancement processing on the first image, so that the user can obtain an image that better meets expected effect.

With reference to the second aspect, in a possible implementation, before sending the second image to the first terminal device, the method further includes: adjusting the second image based on device information of the first terminal device, where the device information includes screen resolution, a screen size, or dynamic range information.

In this embodiment of this application, the server can adjust, based on the device information of the requesting terminal device, an image obtained through cloud enhancement, so that an image finally obtained by the terminal device is an image that matches the device information of the terminal device. This can improve display effect of the image on the terminal device side.

With reference to the second aspect, in a possible implementation, the method further includes: in response to receiving a first request message sent by a second terminal device, adjusting the second image based on device information of the second terminal device, where the first request message is used to request to obtain the second image; and sending the adjusted second image to the second terminal device.

In this embodiment of this application, the server can adjust, based on the device information of the requesting terminal device, an image obtained through cloud enhancement, so that an image finally obtained by the terminal device is an image that matches the device information of the terminal device. This can improve display effect of the image on the terminal device side.

According to a third aspect, an electronic device is provided. The electronic device includes a memory and a processor, where the memory is configured to store computer program code, and the processor is configured to execute the computer program code stored in the memory, to implement the method in any one of the first aspect or the possible implementations of the first aspect, or implement the method in any one of the second aspect or the possible implementations of the second aspect.

According to a fourth aspect, a system is provided. The system includes: a first electronic device, configured to perform the method in any one of the first aspect or the possible implementations of the first aspect; and a second electronic device, configured to perform the method in any one of the second aspect or the possible implementations of the second aspect.

According to a fifth aspect, a computer-readable storage medium is provided. The computer-readable storage medium stores a computer program or instructions. When the computer program or the instructions are executed, the method according to any one of the first aspect or the possible implementations of the first aspect is implemented, or the method according to any one of the second aspect or the possible implementations of the second aspect is implemented.

According to a sixth aspect, a chip is provided. The chip stores instructions. When the instructions are run on a device, the chip is enabled to perform the method in any one of the first aspect or the possible implementations of the first aspect, or the chip is enabled to perform the method in any one of the second aspect or the possible implementations of the second aspect, or the method in any one of the second aspect or the possible implementations of the second aspect is performed.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of a structure of a device-cloud collaboration system according to an embodiment of this application;
FIG. 4 is a diagram of interaction between a mobile phone and cloud corresponding to an existing image processing method according to an embodiment of this application;
FIG. 5 is a schematic flowchart of an existing image processing method according to an embodiment of this application;
FIG. 6 is a schematic flowchart of an image processing method according to an embodiment of this application;
FIG. 7A and FIG. 7B are a schematic flowchart of another image processing method according to an embodiment of this application;
FIG. 8A and FIG. 8B are a schematic flowchart of still another image processing method according to an embodiment of this application;
FIG. 9 is a schematic flowchart of yet another image processing method according to an embodiment of this application;
FIG. 10 is a schematic flowchart of still yet another image processing method according to an embodiment of this application;
FIG. 11 is a schematic flowchart of determining whether to enter a cloud enhancement scene according to an embodiment of this application;
FIG. 12(a) and FIG. 12(b) are diagram of a photographing interface and a diagram of a display interface of a gallery preview image according to an embodiment of this application;
FIG. 13(a) and FIG. 13(b) are a diagram of another photographing interface and a diagram of a display interface of a gallery preview image according to an embodiment of this application; and
FIG. 14 is a diagram of functional modules of an image processing system according to an embodiment of this application.

### DESCRIPTION OF EMBODIMENTS

The following describes technical solutions of this application with reference to accompanying drawings. It is clear that the described embodiments are merely a part rather than all of embodiments of this application.

The following describes the technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "multiple" or "a plurality of" means two or more.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

A method provided in embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

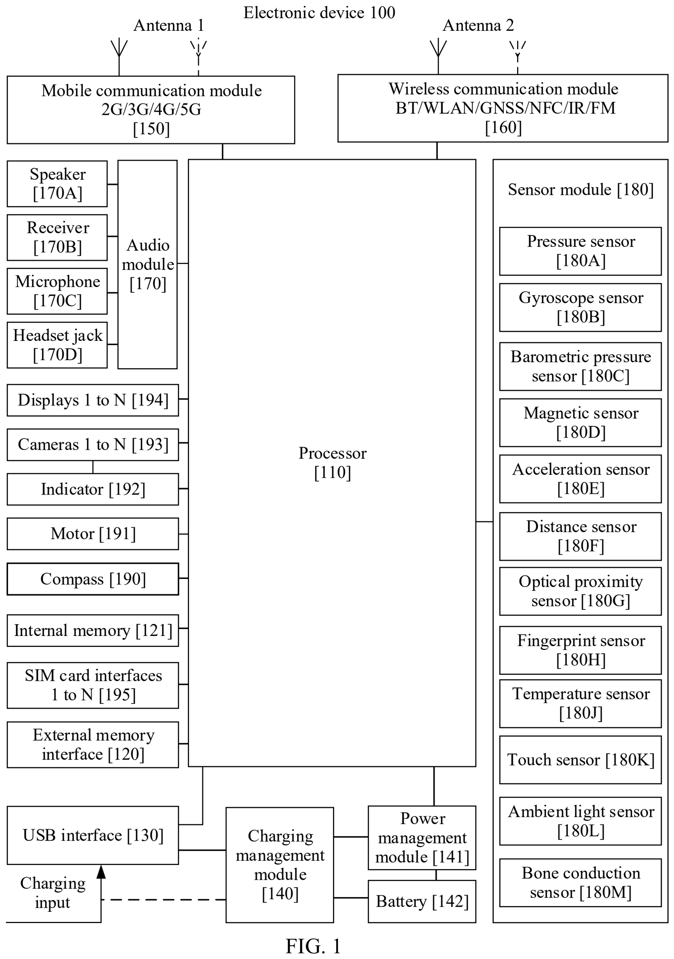

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset to play an audio through the headset. Alternatively, the interface may be configured to connect to another electronic device, for example, an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 when charging the battery 142.

The power management module 141 is configured to connect to the battery 142, the charging management module 140, and the processor 110. The power management module 141 receives an input of the battery 142 and/or an input of the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may also be reused to increase antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a transfer mode between human brain neurons; and may further continuously perform self-learning. Applications such as intelligent cognition of the electronic device 100 may be implemented through the NPU, for example, image recognition, facial recognition, voice recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage region and a data storage region. The program storage region may store an operating system, an App required by at least one function (for example, a sound playing function or an image playing function), and the like. The data storage region may store data (for example, audio data or an address book) and the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be used to listen to music or answer a call in a hands-free mode through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth, to enter a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall sensor. The electronic device 100 may detect opening and closing of a flip cover and a leather case by using the magnetic sensor 180D. In some embodiments, when the electronic device 100 is a flip phone, the electronic device 100 may detect opening and closing of the flip cover by using the magnetic sensor 180D. Further, a feature like automatic unlocking of the flip cover is set based on a detected opening or closing state of the leather case or a detected opening or closing state of the flip cover.

The acceleration sensor 180E may detect magnitudes of accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode, a pedometer, or the like.

The distance sensor 180F is configured to measure a distance. The electronic device 100 may measure the distance in an infrared manner or a laser manner. In some embodiments, in a photographing scene, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142, to prevent the electronic device 100 from being shut down abnormally due to a low temperature. In some other embodiments, when the temperature is less than still another threshold, the electronic device 100 boosts an output voltage of the battery 142, to avoid abnormal shutdown caused by a low temperature.

The touch sensor 180K is also referred to as a "touch panel". The touch sensor 180K may be disposed in the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to combine into a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different regions of the display 194. Different application scenarios (for example, time reminding, information receiving, an alarm clock, and a game) may also correspond to different vibration feedback effect. Touch vibration feedback effect may be further customized.

The indicator 192 may be an indicator, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external memory card. The electronic device 100 interacts with a network through the SIM card, to implement functions such as calling and data communication. In some embodiments, the electronic device 100 uses an embedded SIM (embedded-SIM, eSIM) card, namely, an embedded SIM card. The eSIM card may be embedded into the electronic device 100, and cannot be separated from the electronic device 100.

It should be understood that a telephone card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

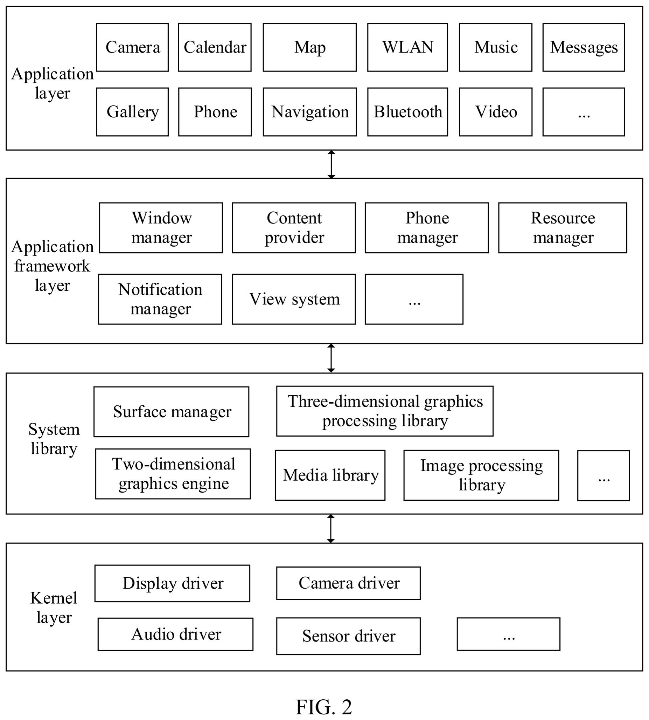

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to: store and obtain data, and enable the data to be accessed by an application. The data may include a video, an image, an audio, calls that are made and answered, a browsing history, a bookmark, a phone book, and the like.

The view system includes visual controls, such as a text display control and an image display control. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application program.

The notification manager enables an application to display notification information in a status bar, and may be configured to convey a notification message. The displayed notification information may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be invoked in java language, and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to an electronic device. For example, the technical solutions may be applied to an electronic device like a mobile phone, a foldable screen, or a tablet computer, where a main application scenario may be a scenario in which photographing is performed via the electronic device; and are specifically applied to an image processing scenario of the electronic device.

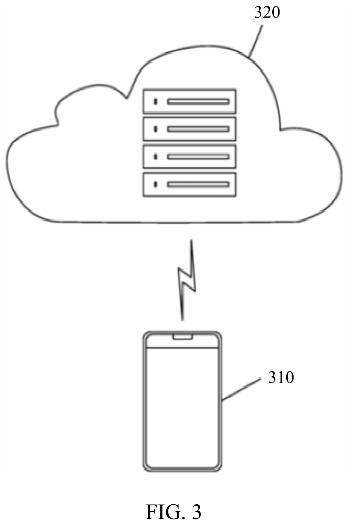

More specifically, the technical solutions in embodiments of this application may be applied to a device-cloud collaboration system including a terminal device and cloud. In device-cloud collaboration, a "device" is a terminal device, "cloud" is cloud, and the cloud may also be referred to as a cloud server or a cloud platform. For example, FIG. 3 is a diagram of a structure of a device-cloud collaboration system according to an embodiment of this application. As shown in FIG. 3, the device-cloud collaboration system may include a terminal device 310 and cloud 320. The terminal device 310 may be connected to the cloud 320 over a wireless network.

In an embodiment, the cloud 320 may be a computer server or a server cluster including a plurality of servers. An implementation architecture of the cloud 320 is not limited in this application. For a specific form of the terminal device 310, refer to the descriptions in the embodiment shown in FIG. 1 or FIG. 2. Details are not described again.

Optionally, FIG. 3 shows an example of one terminal device 310. However, it should be understood that there may be one or more terminal devices 310 in the device-cloud collaboration system, and a plurality of terminal devices 310 may be the same or may be different. This is not limited herein. An image processing method provided in embodiments of this application is a process of implementing image processing through interaction between each terminal device 310 and the cloud 320.

The electronic device (namely, the foregoing terminal device) in embodiments of this application may be a television, a desktop computer, or a notebook computer, or may be a portable electronic device, for example, a mobile phone, a tablet computer, a camera, a video camera, or a video recorder, or may be another electronic device having a photographing function, an electronic device in a 5G network, an electronic device in a future evolved public land mobile network (public land mobile network, PLMN), or the like. This is not limited in this application.

In an existing device camera system, after a sensor captures a raw image, an image signal processor (image signal processor, ISP) in a device performs a series of processing to obtain a YUV image or an RGB image, then uses different post-processing algorithms based on scenarios, and finally obtains a processed color image for a user to view. YUV is types of a compiled true-color color space (color space), "Y" represents luminance (Luminance or Luma), namely, a grayscale value, and "U" and "V" represent chrominance (Chrominance or Chroma), and are used to describe a color and saturation of an image and specify a pixel color. RGB represents colors of three channels: red, green, and blue. This standard covers almost all colors that can be perceived by human vision and is one of the most widely used color systems.

However, for some devices with high integration, for example, mobile devices such as a mobile phone and a tablet computer, performance of processors is limited by sizes and power consumption, and consequently image processing effect is affected. To improve the image processing effect, a method for performing image processing based on an image processing capability of a cloud server is proposed in the industry.

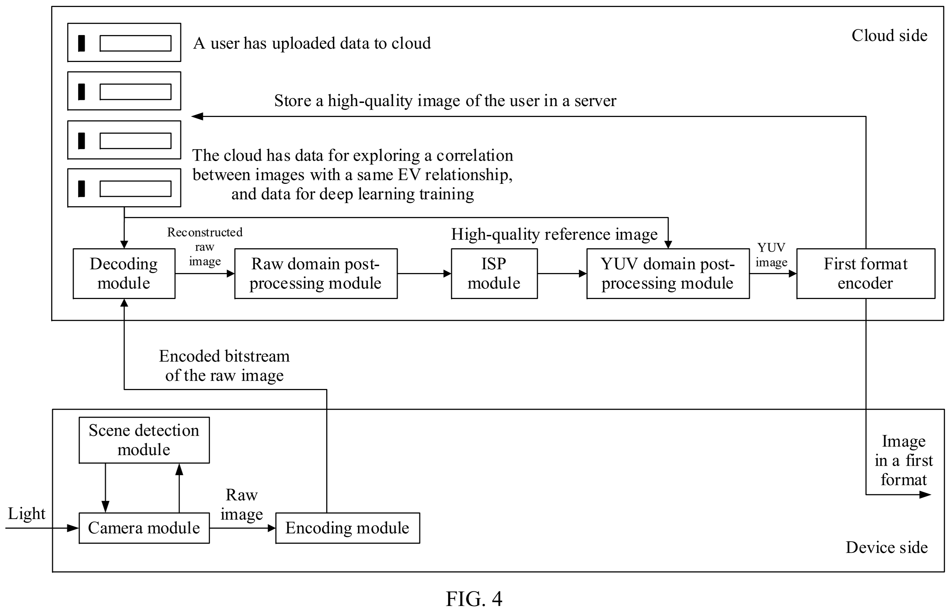

For example, FIG. 4 is a diagram of interaction between a mobile phone and cloud corresponding to an existing image processing method according to an embodiment of this application. A device side represents a mobile phone side, and a cloud side represents a cloud side.

As shown in FIG. 4, the mobile phone includes a camera module, an encoding module, and a scene detection module, and the cloud includes a decoding module, a raw domain post-processing module, an ISP module, a YUV domain post-processing module, and a first format encoder. The scene detection module is configured to detect a current photographing scene. When a user uses the mobile phone to perform photographing, the mobile phone may capture, via the camera module, a raw image corresponding to the current photographing scene. Then, the mobile phone may encode, via the encoding module, the raw image captured by the camera module, to obtain an encoded bitstream corresponding to the raw image, and upload the encoded bitstream corresponding to the raw image to the cloud. The cloud may decode, via the decoding module, the encoded bitstream corresponding to the raw image from the mobile phone, to obtain a reconstructed raw image. The raw domain post-processing module, the ISP module, and the YUV domain post-processing module may sequentially perform raw domain image processing, ISP processing, and YUV domain image processing on the reconstructed raw image, and the YUV domain post-processing module outputs one frame of YUV image. The first format encoder may encode, in a first format, the YUV image output by the YUV domain post-processing module, to finally obtain an image in the first format (for example, a JPEG image). Then, the cloud may return the image in the first format to the mobile phone. Therefore, the mobile phone may store the image in the first format in a gallery or present the image in the first format to the user, and may further store, in a server, the high-quality image of the user that is obtained through processing.

In the method, image processing can be performed by using big data resources and computing resources in the cloud, to achieve better image processing effect. However, to enhance an image based on a capability of the cloud, these modules for encoding, compression, storage, and network transmission of the raw image need to be additionally added, and these processing greatly increases power consumption overheads of the mobile phone, resulting in battery life shortening or overheating of the mobile phone. In this method, the raw image is encoded and uploaded to the cloud for processing as long as photographing is triggered. This imposes an excessively high requirement on a power consumption load capability of the terminal device, easily resulting in overheating, frame freezing, and the like of the terminal device. In addition, when a network connecting the terminal device to the cloud encounters an exception, image processing fails.

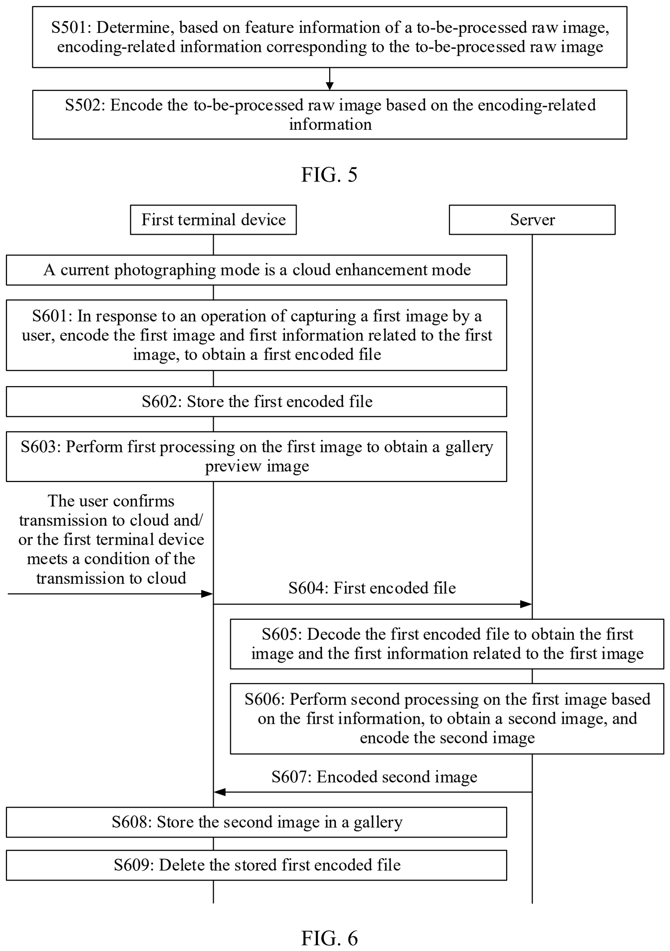

For example, FIG. 5 is a schematic flowchart of an existing image processing method 500 according to an embodiment of this application. As shown in FIG. 5, the method 500 includes the following steps.

S501: Determine, based on feature information of a to-be-processed raw image, encoding-related information corresponding to the to-be-processed raw image.

The feature information of the raw image is a feature value of each coding unit in the raw image, and the feature value includes at least one of brightness, smoothness, edge strength, edge direction consistency, and texture complexity.

The encoding-related information includes subjective distortion-related information of each coding unit, and may further include a coding parameter of each coding unit. The subjective distortion-related information is used to optimize subjective quality of the image, and the coding parameter includes a quantization parameter.

S502: Encode the to-be-processed raw image based on the encoding-related information.

In the method, the encoded raw image is transmitted to a cloud server via a network, so that an image optimization module of the cloud server optimizes a decoded and reconstructed raw image, to further achieve better image processing performance and significantly improve subjective quality of a final image. However, to enhance an image based on a capability of cloud, these modules for encoding, compression, storage, and network transmission of the raw image need to be additionally added, and these processing greatly increases power consumption overheads of the mobile phone, resulting in battery life shortening or overheating of the mobile phone. In this method, the raw image is encoded and uploaded to the cloud for processing as long as photographing is triggered. This imposes an excessively high requirement on a power consumption load capability of the terminal device, easily resulting in overheating, frame freezing, and the like of the terminal device. In addition, when a network encounters an exception, image processing fails.

In conclusion, all existing image processing methods have a problem of poor image processing effect or high power consumption generated in an image processing process, and further have a problem of poor device-cloud collaboration in the network exception.

In view of this, this application provides an image processing method and an electronic device. In the method, cloud enhancement processing is not performed on images output in all scenes. When it is determined that cloud enhancement processing is not required for an image output in a current scene, the image is not transmitted to cloud for processing, and encoding, compression, and the like are not performed on the image, so that power consumption overheads of the electronic device can be reduced. In addition, when it is determined that cloud enhancement processing needs to be performed on an output image, transmission to cloud is not directly started, and is started only when a user confirms the transmission to cloud and/or power, a temperature, and a current network of the electronic device meet a requirement for transmission to cloud. This can avoid excessively high power consumption of the electronic device, that is, can avoid overheating, frame freezing, and the like of the electronic device. In addition, when a network encounters an exception, the transmission to cloud is started only after the network recovers, so that a failure of transmission to cloud caused by transmission to cloud performed during the network exception can be avoided.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. A character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in another embodiment", and "in some other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

For example, FIG. 6 is a schematic flowchart of an image processing method 600 according to an embodiment of this application. As shown in FIG. 6, a current photographing mode is a cloud enhancement mode, and the method 600 includes the following steps.

The cloud enhancement mode is a mode in which a currently photographed image needs to be processed by cloud.

S601: In response to an operation of capturing a first image by a user via a first terminal device, the first terminal device encodes the captured first image and first information related to the first image, to obtain a first encoded file.

In some embodiments, the first image includes a raw image.

Encoding the first image can save storage space and facilitate sending.

The operation of capturing the first image by the user via the first terminal device may be, for example, a photographing operation of the user, or may be a video recording operation of the user. The first information related to the first image is metadata corresponding to the first image, and the first information related to the first image may include one or more of an exposure parameter, an image size, collected device information (namely, device information of the first terminal device), scene information, and photographing mode information, that are used to describe the first image. In addition, the first information related to the first image may further include other information used to describe the first image. This is not limited in this application.

It should be understood that there may be one or more first images captured and encoded by the first terminal device. A specific quantity may be determined based on a current scene, and quantities of first images captured and encoded in different scenes may also be different.

In an example, a signal-to-noise ratio of an image in a scene with insufficient light (namely, a low-brightness scene) is less than that of an image in a scene with sufficient light. However, in a cloud enhancement processing process, a larger quantity of images is more conducive to increasing the signal-to-noise ratio of the image. Therefore, a quantity of captured and encoded first images (which may also be understood as a quantity of frames of captured and encoded first images) in the scene with the insufficient light is larger.

In another example, a plurality of first images of different exposure types may be captured and encoded in a high dynamic scene.

In still another example, in a wide-aperture photographing mode or another scene in which data of a plurality of cameras is required, a plurality of first images are captured through the plurality of cameras and encoded.

S602: The first terminal device stores the first encoded file.

The first terminal device temporarily stores the first encoded file.

S603: The first terminal device performs first processing on the first image to obtain a gallery preview image corresponding to the first image.

The first processing may be that the first terminal device preprocesses the first image through an ISP of the first terminal device, stores the obtained gallery preview image corresponding to the first image in a gallery application of the first terminal device, and presents the gallery preview image to the user when the user enters the gallery to browse the image.

In some embodiments, on an interface on which the user browses the gallery preview image, the gallery preview image is associated with a first control, and the first control is used by the user to perform an operation of starting cloud transmission.

In some embodiments, the gallery preview image is further associated with a second control, the second control is used by the user to select a second cloud enhancement degree, and this second cloud enhancement is portrait enhancement based on first cloud enhancement.

In an implementation, the first control may be an icon of the cloud transmission. When the user taps the first control, the cloud transmission is started, and the user may pause the cloud transmission by tapping the first control again.

In an implementation, the first cloud enhancement is overall cloud enhancement on the first image, and may be, for example, noise reduction processing, high dynamic processing, or wide-aperture blurring processing performed on the first image by the cloud. The second cloud enhancement degree may be, for example, a degree of further portrait enhancement based on an image obtained through the first cloud enhancement processing. The second cloud enhancement degree may be represented by a level, and may be represented by, for example, a level 0 to a level 10. A larger number indicates a higher second cloud enhancement degree.

That the first terminal device performs first processing on the first image may be performing only some simple ISP processing on the first image to obtain a corresponding YUV image, and then directly converting the YUV image into a preview image in an RGB format for displaying on a gallery preview interface.

S604: Send the first encoded file to a server in response to an operation of confirming transmission to cloud by the user and/or when the first terminal device meets a condition of the transmission to cloud.

In some embodiments, the first terminal device further sends a second encoded file to the server. The second encoded file may include information indicating the second cloud enhancement degree selected by the user, and may further include an intermediate result of algorithm processing corresponding to the first image, for example, a preview YUV image before and after photographing and a JPG image obtained through algorithm processing on the first image.

The first encoded file and the second encoded file may be separately sent, or may be sent in a package.

The condition of the transmission to cloud includes: Current load of the first terminal device is less than a first load threshold, a current temperature of the first terminal device is less than a first temperature threshold, and/or a current network signal is normal.

In an embodiment, after the user completes photographing, if the current load of the first terminal device is less than the first load threshold, the current temperature is less than the first temperature threshold, and the current network signal is normal, transmission to cloud is automatically started in the background, in other words, the first encoded file is sent to the server (or the first encoded file and the second encoded file are sent). If the first terminal device does not meet the conditions "the current load is less than the first load threshold, the current temperature is less than the first temperature threshold, and the current network signal is normal", the transmission to cloud is started when the first terminal device meets the conditions. After completing photographing, the user may exit a camera application, and the camera is switched to the background for running. When the first terminal device meets the conditions, the transmission to cloud is started in the background.

In another embodiment, after completing photographing, the user taps a gallery icon on a photographing interface of the first terminal device to enter a display interface of the gallery preview image, or taps a gallery icon on a desktop of the first terminal device to enter a display interface of the gallery preview image. In this case, if the user does not tap the first control on the display interface of the gallery preview image, transmission to cloud is started when the current load of the first terminal device is less than the first load threshold, the current temperature of the first terminal device is less than the first temperature threshold, and the current network signal is normal. Alternatively, if the user taps the first control on the display interface of the gallery preview image, transmission to cloud is directly started based on a user requirement as preference. Alternatively, if the user taps the first control on the display interface of the gallery preview image, it is further determined whether the condition "the current load of the first terminal device is less than the first load threshold, or the current temperature of the first terminal device is less than the first temperature threshold, or the current network signal is normal" is met, and if the condition is met, transmission to cloud is started, or if the condition is not met, transmission to cloud is started when the condition is met. Alternatively, if the user taps the first control on the display interface of the gallery preview image, it is further determined whether the conditions "the current load of the first terminal device is less than the first load threshold, or the current temperature of the first terminal device is less than the first temperature threshold, and the current network signal is normal" are met, and if the conditions are met, transmission to cloud is started, or if the conditions are not met, transmission to cloud is started when the conditions are met.

The first load threshold may be, for example, any load value between 50% and 100%, for example, 60%. The first temperature threshold may be, for example, any temperature between 37°C and 70°C, for example, 45°C. That the network signal is normal may mean that the network signal is greater than a first signal threshold. The first signal threshold may be, for example, any signal value between -85 DB and 105 DB, for example, 95 DB.

It should be understood that an occurrence sequence of S603 and S604 is not limited, and S603 and S604 may simultaneously occur or may not simultaneously occur.

S605: The server decodes the first encoded file to obtain the first image and the first information related to the first image.

In some embodiments, the server may further decode the second encoded file to obtain the information indicating the second cloud enhancement degree selected by the user and/or the intermediate result of the algorithm processing corresponding to the first image, for example, the preview YUV image before and after photographing and the JPG image obtained through algorithm processing on the first image.

S606: The server performs second processing on the first image based on the first information related to the first image, to obtain a second image, and encodes the second image.

The second processing includes the first cloud enhancement processing, or the second processing includes the first cloud enhancement processing and the second cloud enhancement processing.

In some embodiments, the server performs second processing on the first image based on the first information related to the first image, and the information indicating the second cloud enhancement degree selected by the user and/or the intermediate result of the algorithm processing corresponding to the first image, to obtain the second image.

In an example, the server performs second processing on the first image based on the scene information and the photographing mode information related to the first image, and the second cloud enhancement degree selected by the user.

In some embodiments, the server may further adjust the second image based on the device information of the first terminal device, so that the second image returned to the first terminal device better matches the first terminal device.

The processed first image may be one or more first images captured by a single camera, or may be a plurality of first images captured by a plurality of cameras, or may be a plurality of first images captured by a plurality of terminal devices.

In some embodiments, when a photographing mode related to the first image is a wide-aperture photographing mode, the captured first image may be a plurality of first images captured by a plurality of cameras, and the second processing may be calculating depth information based on the plurality of first images captured by the plurality of cameras, to achieve blurring effect.

In some embodiments, when a photographing mode related to the first image is a wide-aperture photographing mode, the captured first image may be a plurality of first images captured by a plurality of terminal devices, and the second processing may be joint processing on a plurality of raw images captured by the plurality of terminal devices and performing 3D modeling or scene fusion editing on the processed image. The second processing may further include performing differentiated processing based on device information of the plurality of terminal devices. For example, when a requesting terminal device is a high-resolution large-screen device, a high-resolution image is processed and output; or when a terminal device requesting an image is a low-resolution device, a low-resolution image is output. For another example, a dynamic range and a contrast of the output image may be further adjusted based on a display dynamic range of the requesting terminal device, to adapt to a display capability of the requesting terminal device.

In some embodiments, for an image processing request of the first terminal device, the second image output by the server may be hierarchically displayed by the first terminal device. In other words, an image obtained through the first cloud enhancement processing and the second cloud enhancement processing or an image obtained through only the first cloud enhancement processing may be displayed by the terminal device. Specifically, the user may separately browse, on the first terminal device, the image obtained through the first cloud enhancement processing and the second cloud enhancement processing and the image obtained through only the first cloud enhancement processing, and select, from the images, an image that is expected to be stored for storage.

It should be understood that a format of the encoded second image depends on a format supported by the first terminal device. Generally, the format of the encoded second image is a JPEG format.

S607: The server sends the encoded second image to the first terminal device.

S608: The first terminal device stores the second image in the gallery.

Specifically, after decoding the encoded second image, the first terminal device stores the decoded second image in the gallery of the first terminal device. The second image may replace a corresponding gallery preview image in the first terminal device.

In some embodiments, the user may browse, in the gallery, the second image obtained through the first enhancement processing and the second enhancement processing. If the user is satisfied with the second image, the second image may be directly stored. If the user is not satisfied with portrait enhancement on the second image, the user may browse and store the image obtained through only the first enhancement processing.

S609: The first terminal device deletes the stored first encoded file.

In this embodiment of this application, when the cloud enhancement processing needs to be performed on the image captured by the terminal device, the transmission to cloud is not immediately started after the image is captured, and is started in response to an operation of confirming the transmission to cloud by the user, or the transmission to cloud is automatically started when the current load, the current temperature, and a current network condition of the terminal device meet the condition of the transmission to cloud. In this way, the transmission to cloud in a case in which the terminal device is heavily loaded or overheated, or is in a poor network condition can be avoided, so that cases such as excessively high load and overheating caused by the transmission to cloud of the terminal device can be avoided, and a failure of the transmission to cloud due to the poor network condition can also be avoided. This improves load balance in a process of using the terminal device, and increases a success rate of the transmission to cloud in the process of using the terminal device.

In addition, in a scenario in which cloud enhancement is performed on the captured image, the terminal device does not perform a series of complex processing on the captured image at the local end, and generates the gallery preview image through simple preprocessing for the user to browse. This can also reduce power consumption overheads of the terminal device to some extent.

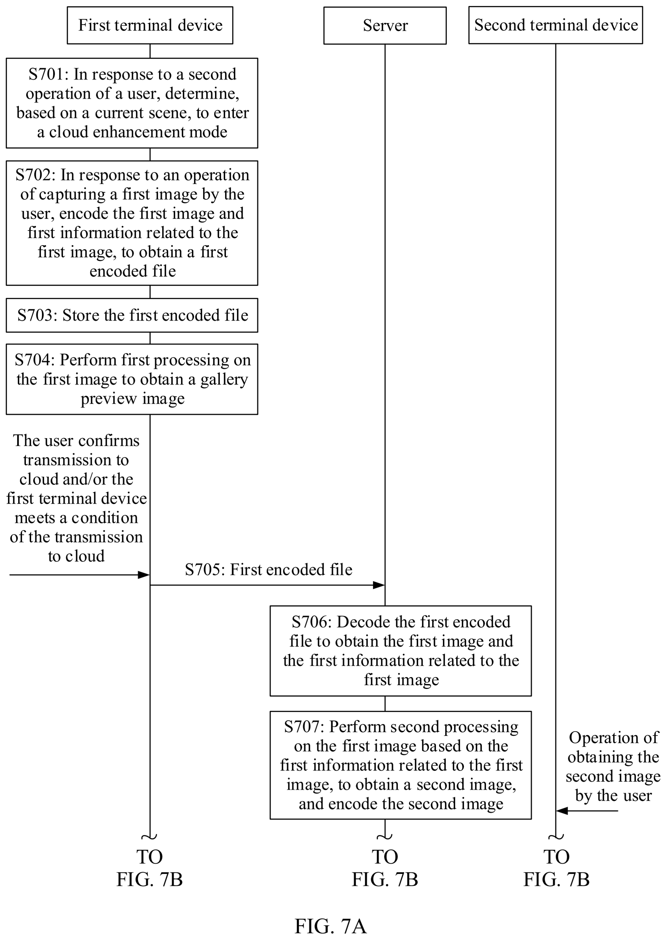

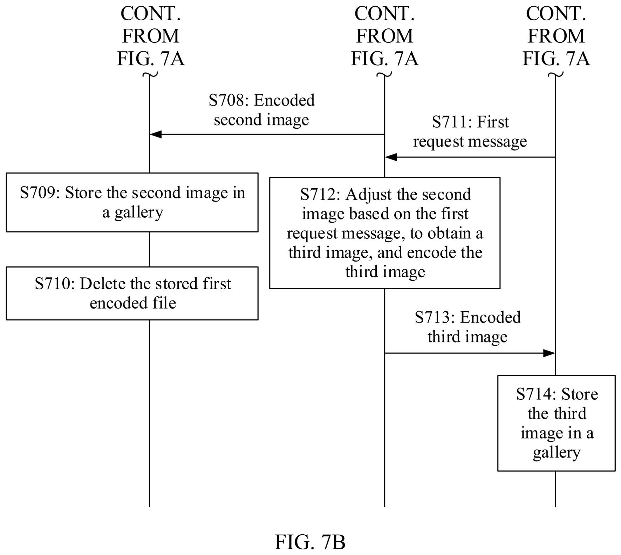

For example, based on the embodiment shown in FIG. 6, FIG. 7A and FIG. 7B are a schematic flowchart of another image processing method 700 according to an embodiment of this application. As shown in FIG. 7A and FIG. 7B, the method 700 includes the following steps.

S701: In response to a second operation of a user, determine, based on a current scene, to enter a cloud enhancement mode.

The second operation of the user may be an operation of starting a camera of a first terminal device by the user to enter a photographing interface, or may be a photographing operation of the user, for example, pressing a photographing key by the user.

For example, the operation of starting the camera of the first terminal device by the user to enter the photographing interface may be, for example, that the user taps or touches a camera icon on a desktop of the first terminal device to enter the photographing interface. The first terminal device may start and run the camera in response to a tap or touch operation performed by the user on the camera icon (or the user may start the camera via a voice assistant, and this is not limited). After starting and running the camera application, the first terminal device presents the photographing interface to the user. In addition, the first terminal device further obtains a preview image corresponding to a current photographing scene, displays the preview image in the photographing interface, and displays the preview image in a viewfinder frame on the photographing interface. When the camera application of the first terminal device is started, the photographing interface presented by the first terminal device to the user may include at least the preview image and the photographing key.

Optionally, a current preview image is first obtained in response to the second operation of the user, a current scene is determined based on the preview image, and whether to enter the cloud enhancement mode is further determined based on the current scene. The preview image may be an image displayed in the viewfinder frame on the photographing interface before a photographing operation of the user, or may be an image displayed in the viewfinder frame on the photographing interface during a photographing operation of the user.

In some embodiments, if a portrait or a night (or described as a low-brightness scene) is detected on the preview image, it is determined to enter the cloud enhancement mode.

In some embodiments, if it is detected, based on the preview image, that the current scene is a high dynamic scene (namely, an HDR scene), it is determined to enter the cloud enhancement mode. In an example, whether the current photographing scene is a high dynamic scene is determined based on ratios/a ratio of an overexposed region and/or an underexposed region in the preview image. For example, if the ratio of the overexposed region is greater than a threshold, it is determined that the current photographing scene is the high dynamic scene. For example, the threshold may be 60%, 70%, or the like. This is not limited herein.

In some embodiments, if the user selects a wide-aperture photographing mode, it is determined to enter the cloud enhancement mode.

In some embodiments, if the user manually selects the cloud enhancement mode, it is determined to enter the cloud enhancement mode.

In some embodiments, whether to enter the cloud enhancement mode is determined by a deep learning network. The deep learning network may determine whether the scene corresponding to the current preview image belongs to a scene requiring high computing power (that is, the foregoing portrait, night, high dynamic scene, or the like), and the deep learning network may further perform image quality assessment (IQA) on the preview image, to determine imaging quality of the current scene, and further determine whether image quality of the first image captured in the current scene can be improved through cloud enhancement. If a result output by the deep learning network is that the image quality of the first image captured in the current scene can be improved through the cloud enhancement (for example, the deep learning network determines that the scene corresponding to the current preview image belongs to any one of the portrait, the night, and the high dynamic scene, and that a quality score of the first image captured in the current scene is less than a first score; and for another example, if the deep learning network determines that the scene corresponding to the current preview image belongs to the portrait scene, and detects that confidence of the portrait is less than first confidence), it is determined to enter the cloud enhancement mode.

In some embodiments, in response to the second operation of the user, whether to enter the cloud enhancement mode is determined based on the current scene, current load of the first terminal device, and/or a current temperature of the first terminal device. When the current load of the first terminal device is greater than a first load threshold and/or the current temperature of the first terminal device is greater than a first temperature threshold, it is determined not to enter the cloud enhancement mode.

In some embodiments, in response to the second operation of the user, whether to enter the cloud enhancement mode is determined based on the current scene, current load of the first terminal device, and/or a current temperature of the first terminal device. When the current load of the first terminal device is less than a first load threshold and/or the current temperature of the first terminal device is less than a first temperature threshold, whether to enter the cloud enhancement mode is further determined based on the current scene.

S702 to S710 are the same as S601 to S609 in the embodiment shown in FIG. 6. For brevity, details are not described herein again.

S711 to S714 below are schematic descriptions of a procedure in which a second terminal device sharing cloud with the first terminal device requests to obtain an image in the cloud from the cloud.

S711: The second terminal device sends a first request message to a server in response to an operation of obtaining a second image by the user via the second terminal device.

For example, the operation of obtaining the second image by the user via the second terminal device may be an operation that the user views, by sharing a cloud account, an image stored in the cloud, and taps the second image in the image stored in the cloud.

In some embodiments, the first request message includes device information of the second terminal device, and the device information of the second terminal device includes information such as a screen size, screen resolution, and a dynamic range of the second terminal device.

S712: The server adjusts the second image based on the first request message, to obtain a third image, and encodes the third image.

In some embodiments, the server adjusts the second image based on the device information of the second terminal device carried in the first request message, to obtain the third image.

In some embodiments, the server stores the device information of the second terminal device. After receiving the first request message, the server directly adjusts the second image based on the device information of the second terminal device that is stored at the local end, to obtain the third image.

S713: The server sends the encoded third image to the second terminal device.

S714: The second terminal device stores the third image in a gallery.

In this embodiment of this application, cloud enhancement processing is not required for images captured in all scenes. For example, cloud enhancement processing is not required when there is no portrait in the preview image or light in the current scene is sufficient. The terminal device can determine, based on the current scene, whether to enter the cloud enhancement mode. This can avoid unnecessary image enhancement processing, thereby reducing power consumption overheads of the terminal device.

In addition, when the cloud enhancement processing needs to be performed on the image captured by the terminal device, transmission to cloud is not immediately started after the image is captured, and is started in response to an operation of confirming the transmission to cloud by the user, or transmission to cloud is automatically started when the current load, the current temperature, and a current network condition of the terminal device meet a condition of the transmission to cloud. In this way, the transmission to cloud in a case in which the terminal device is heavily loaded or overheated, or is in a poor network condition can be avoided, so that cases such as excessively high load and overheating caused by the transmission to cloud of the terminal device can be avoided, and a failure of the transmission to cloud due to the poor network condition can also be avoided. This improves load balance in a process of using the terminal device, and increases a success rate of the transmission to cloud in the process of using the terminal device.

In addition, in a scenario in which cloud enhancement is performed on the captured image, the terminal device does not perform a series of complex processing on the captured image at the local end, and generates a gallery preview image through simple preprocessing for the user to browse. This can also reduce power consumption overheads of the terminal device to some extent.

In addition, in this embodiment of this application, sharing of the image between a plurality of terminal devices can be further implemented, and images obtained by different terminal devices can match device information of the local devices.

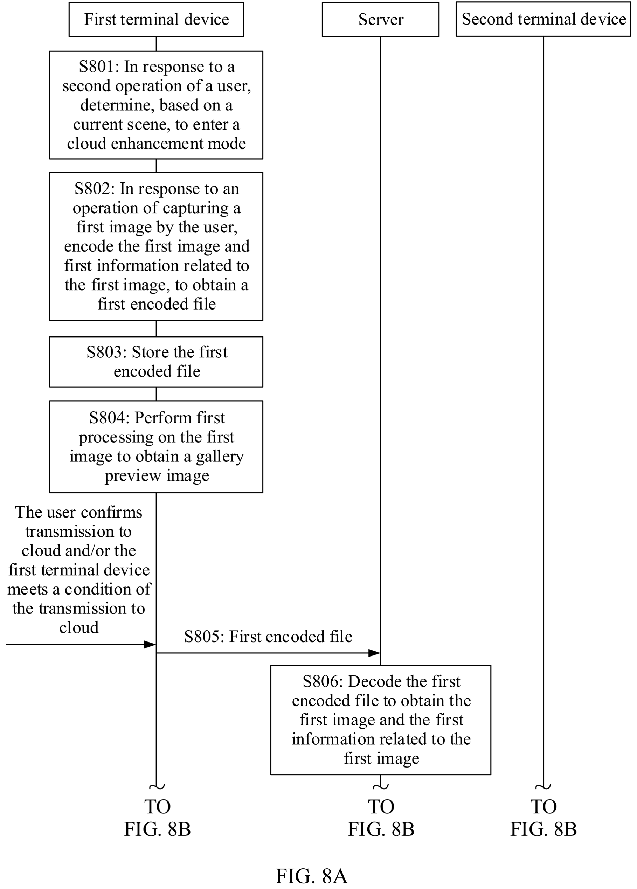

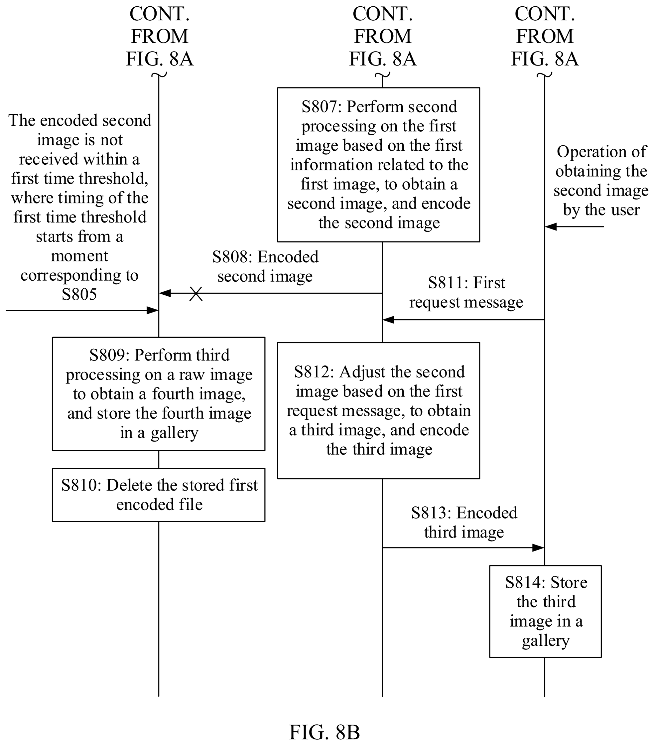

For example, based on the embodiment shown in FIG. 6 or FIG. 7A and FIG. 7B, FIG. 8A and FIG. 8B are a schematic flowchart of still another image processing method 800 according to an embodiment of this application. As shown in FIG. 8A and FIG. 8B, the method 800 includes the following steps.

S801 to S808 are the same as S701 to S708 in the embodiment shown in FIG. 7A and FIG. 7B. For brevity, details are not described herein again.

S809: If the first terminal device does not receive the encoded second image within a first time threshold, the first terminal device performs third processing on the first image based on the first encoded file stored at the local end, to obtain a fourth image, and stores the fourth image in the gallery, where a timing start moment of the first time threshold is a moment at which the first terminal device sends the first encoded file to the server.

The third processing means that an ISP module and another post-processing module of the first terminal device process the first image, and may include, for example, multi-frame noise reduction, multi-frame HDR, and wide-aperture blurring on the first image.

For example, the first time threshold may be any time between 12 hours and 48 hours, for example, 24 hours.

S810: The first terminal device deletes the stored first encoded file.

S811 to S814 below are schematic descriptions of the procedure in which the second terminal device sharing the cloud with the first terminal device requests to obtain the image in the cloud from the cloud. S811 to S814 are the same as S711 to S714 in the embodiment shown in FIG. 7A and FIG. 7B. For brevity, details are not described herein again.

In other words, when the first terminal device does not successfully receive the encoded second image, another terminal device sharing the cloud with the first terminal device may also request to obtain the second image from the server.

In this embodiment of this application, in a process in which the terminal device performs cloud enhancement processing, before sending the encoded file to the server, the terminal device backs up and stores the encoded file at the local end. When the terminal device does not receive, within a specified period, a processed image sent by the server, the terminal device can restart an image processing procedure on the local side, and further processing is performed on the image at the local end based on the encoded file that is backed up and stored. In this way, a high-quality image can be obtained in a timely manner in a poor network condition. This can improve user experience.

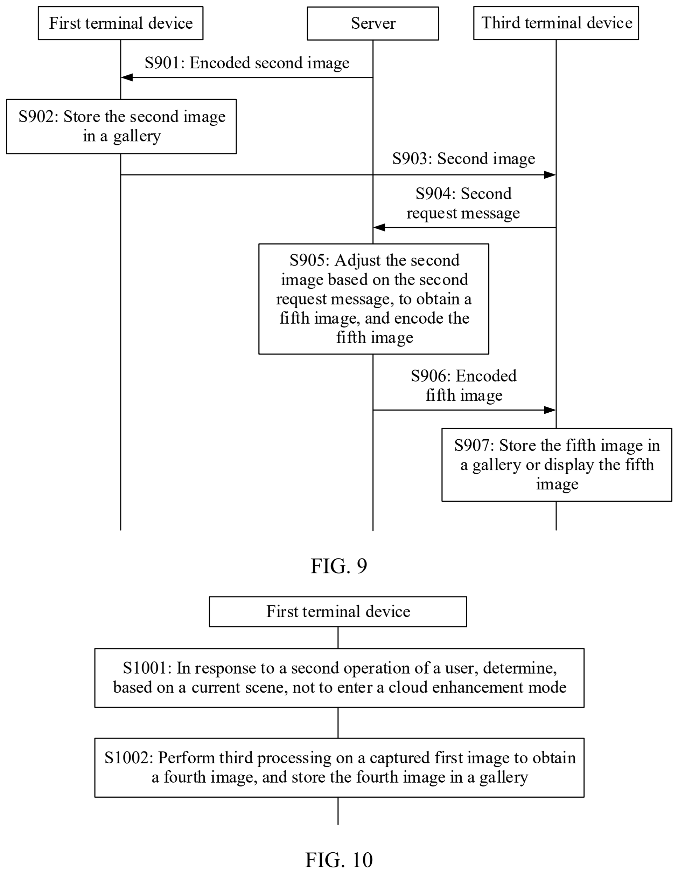

For example, based on the embodiment shown in FIG. 6 or FIG. 7A and FIG. 7B, FIG. 9 is a schematic flowchart of yet another image processing method 900 according to an embodiment of this application. As shown in FIG. 9, the method 900 includes the following steps.

S901: A first terminal device receives an encoded second image sent by a server.

S902: The first terminal device stores the second image in a gallery.

Steps S901 and S902 are the same as S607 and S608 in the embodiment shown in FIG. 6 and S708 and S709 in the embodiment shown in FIG. 7A and FIG. 7B. For brevity, details are not described herein again.

S903: The first terminal device sends the second image to a third terminal device.

The first terminal device shares cloud with the third terminal device. In other words, both the first terminal device and the third terminal device log in to a same server (cloud account).

In some embodiments, the first terminal device sends the second image to the third terminal device via a chat application, Bluetooth, or the like.

The second image carries a cloud enhancement identifier, and the cloud enhancement identifier indicates that the second image is an image obtained by performing cloud enhancement processing by the shared cloud.

S904: After receiving the second image, the third terminal device sends a second request message to the server, where the second request message is used to request to obtain a fifth image matching the third terminal device, and the fifth image is obtained by the server by adjusting the second image based on device information of the third terminal device.

In some embodiments, after the third terminal device receives the second image, if the second image carries the cloud enhancement identifier, the third terminal device sends the second request message to the server.

In some embodiments, the second request message includes the device information of the third terminal device, and the device information of the third terminal device includes information such as a screen size, screen resolution, and a dynamic range of the third terminal device.

S905: After receiving the second request message, the server adjusts the second image based on the device information of the third terminal device, to obtain the fifth image, and encodes the fifth image.

In some embodiments, the server adjusts the second image based on the device information of the third terminal device carried in the second request message, to obtain the fifth image.

In some embodiments, the server stores the device information of the third terminal device. After receiving the second request message, the server directly adjusts the second image based on the device information of the third terminal device that is stored at the local end, to obtain the fifth image.

S906: The server sends the encoded fifth image to the third terminal device.

S907: The third terminal device stores the fifth image in a gallery, or the third terminal device displays the fifth image to a user.

Specifically, the third terminal device decodes the encoded fifth image to obtain the fifth image, and then stores the fifth image in the gallery, or displays the fifth image to the user.

In this embodiment of this application, after receiving the processed image sent by the server, the terminal device can share the processed image with another terminal device sharing the cloud. After receiving the processed image, the another terminal device can request, from the server, to obtain a corresponding image that better matches information about the local device. In this way, mutual sharing of an image obtained through cloud enhancement processing can be implemented between a plurality of terminal devices, and an image presented to the user on each terminal device matches the local device. This can further improve user experience.

In parallel with any one of the embodiments shown in FIG. 6 to FIG. 9, for example, FIG. 10 is a schematic flowchart of still yet another image processing method 1000 according to an embodiment of this application. As shown in FIG. 10, the method 1000 includes the following steps.

S1001: In response to a second operation of a user, determine, based on a current scene, not to enter a cloud enhancement mode.

In some embodiments, if current load of a first terminal device is greater than a first load threshold and/or a current temperature of the first terminal device is greater than a first temperature threshold when the user performs a photographing operation, regardless of whether the current scene meets a condition for entering the cloud enhancement mode, it is determined not to enter the cloud enhancement mode.

In some embodiments, except for the scene in which it is determined to enter the cloud enhancement mode in the embodiments shown in FIG. 6 to FIG. 8A and FIG. 8B, another scene may be considered as a scene in which it is determined not to enter the cloud enhancement mode.

S1002: The first terminal device performs third processing on a captured first image to obtain a fourth image, and stores the fourth image in a gallery.

An explanation of S1002 is the same as an explanation of S809 in the embodiment shown in FIG. 8A and FIG. 8B. For brevity, details are not described herein again.

In this embodiment of this application, when it is determined that the current scene is a scene in which the terminal device does not enter the cloud enhancement mode, the captured image is not transmitted to cloud for processing, and the terminal device performs a series of processing on the captured image at the local end. In this way, encoding, compression, transmission to cloud, and the like do not need to be performed on the captured image. This can avoid some unnecessary power consumption overheads of the terminal device, thereby improving running performance of the terminal device, and prolonging a battery life of the terminal device.

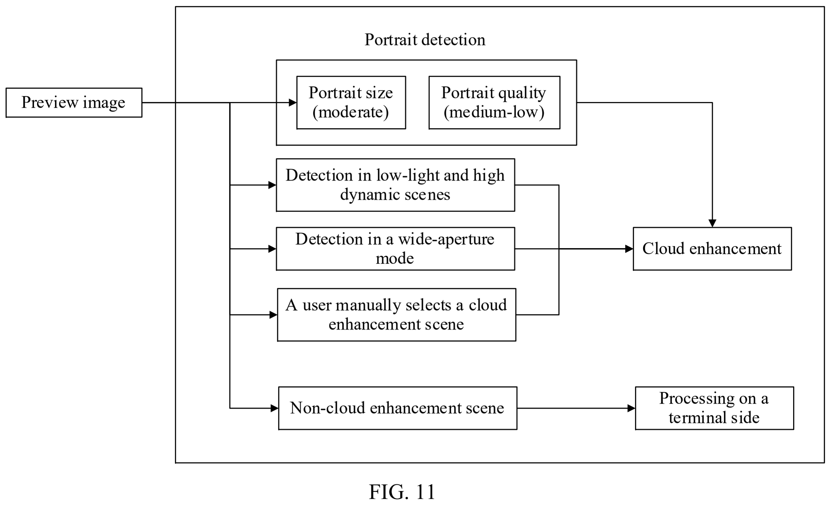

To understand the operations in S701, S801, and S901 more clearly, for example, FIG. 11 is a schematic flowchart of determining whether to enter a cloud enhancement scene according to an embodiment of this application.

As shown in FIG. 11, a terminal device may determine, based on a preview image and with reference to a related operation of a user or a current photographing mode, whether to enter a cloud enhancement mode.

An explanation of the preview image is described in detail in the embodiments shown in FIG. 6 to FIG. 8A and FIG. 8B. For brevity, details are not described herein again.

It can be learned from FIG. 11 that, when a current scene meets any one or more of the following scenes, it is determined to enter the cloud enhancement mode:
(1) The terminal device detects a portrait in the preview image; and a size of the portrait is moderate relative to the entire preview image (for example, a ratio of an area of the portrait to the entire preview image is between a first ratio and a second ratio), and/or quality of the portrait is assessed at a medium-low level (for example, a portrait quality score is less than a first score, or a portrait quality score is less than a first score and greater than a second score).
(2) The terminal device determines, based on both the preview image and an environment in which the terminal device is located, that the current scene is a low-brightness scene (namely, a low-light scene).
(3) The terminal device detects that the current photographing mode is a wide-aperture mode (or a mode like a portrait mode, that requires cloud enhancement).
(4) The terminal device detects that the user selects the cloud enhancement scene.

In an example, the user may select cloud enhancement through a display interface of a gallery preview image.

When determining that the current scene does not belong to any one of the foregoing scenes, the terminal device determines not to enter the cloud enhancement mode.

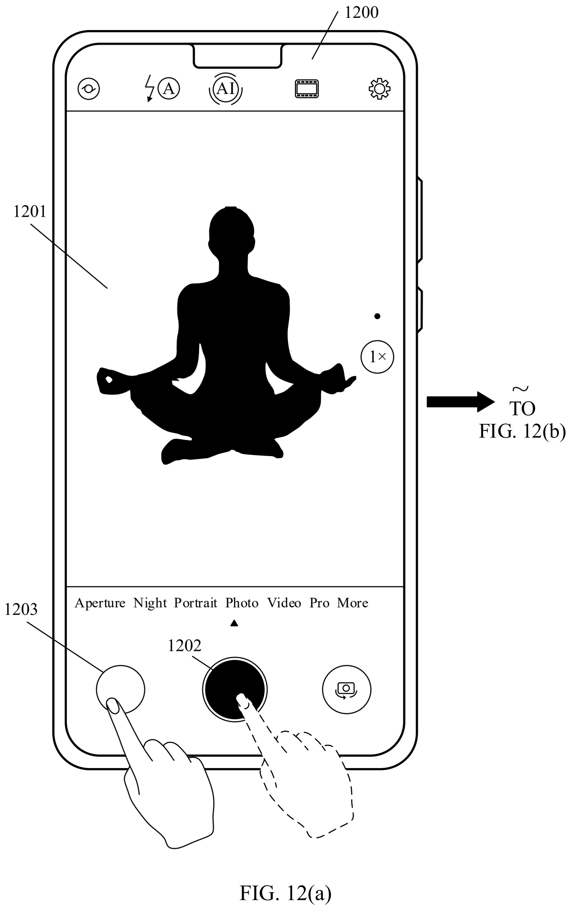

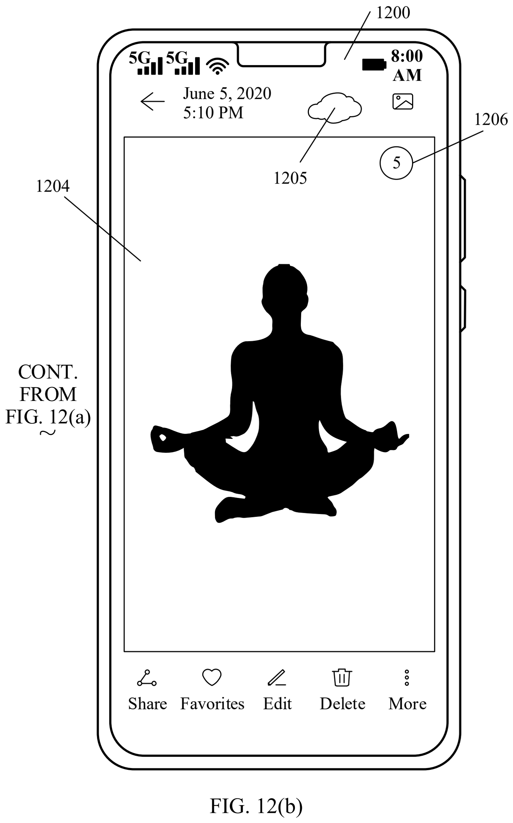

For example, FIG. 12(a) and FIG. 12(b) are a diagram of a photographing interface and a diagram of a display interface of a gallery preview image according to an embodiment of this application.

FIG. 12(a) is the diagram of the photographing interface according to this embodiment of this application. As shown in FIG. 12(a), an electronic device 1200 is in the photographing interface, and the photographing interface includes at least a preview image 1201, a photographing control 1202, and a gallery preview control 1203. The preview image 1201 may be used by a first terminal device to determine whether to enter a cloud enhancement mode. This corresponds to S701, S801, and S1001. The photographing control 1202 is used by a user to perform a photographing operation. The gallery preview control 1203 is used by the user to switch a display interface of the electronic device 1200 to the display interface of the gallery preview image (namely, the interface shown in FIG. 12(b)).

In some embodiments, when the electronic device 1200 determines to enter the cloud enhancement mode, after the user performs the photographing operation by tapping the photographing control 1202, the electronic device 1200 obtains the gallery preview image 1204 through first processing at the local end, and stores the gallery preview image in a gallery. When the user further taps the gallery preview control 1203, the display interface of the electronic device 1200 is switched to the display interface of the gallery preview image 1204 shown in FIG. 12(b). The interface includes at least the gallery preview image 1204, a cloud enhancement icon 1205, and a second cloud enhancement degree selection control 1206. The user may trigger, by tapping the cloud enhancement icon 1205, transmitting a first image corresponding to the gallery preview image 1204 to cloud (that is, trigger an operation in S604, S705, or S805). The user may further select a second cloud enhancement degree by tapping the second cloud enhancement degree selection control 1206, where the second cloud enhancement degree may be measured based on a level. For example, the level may be a level 0 to a level 10. A larger number indicates a higher second cloud enhancement degree.

It should be understood that, when the electronic device 1200 determines not to enter the cloud enhancement mode, after the user performs the photographing operation by tapping the photographing control 1202, the electronic device 1200 obtains a high-quality image through third processing at the local end, and stores the high-quality image in the gallery. When the user further taps the gallery preview control 1203, on the display interface of the electronic device 1200, a high-quality image obtained through processing of an ISP module and a post-processing module at the local end is displayed, and the cloud enhancement icon and the second cloud enhancement degree selection control are not displayed.

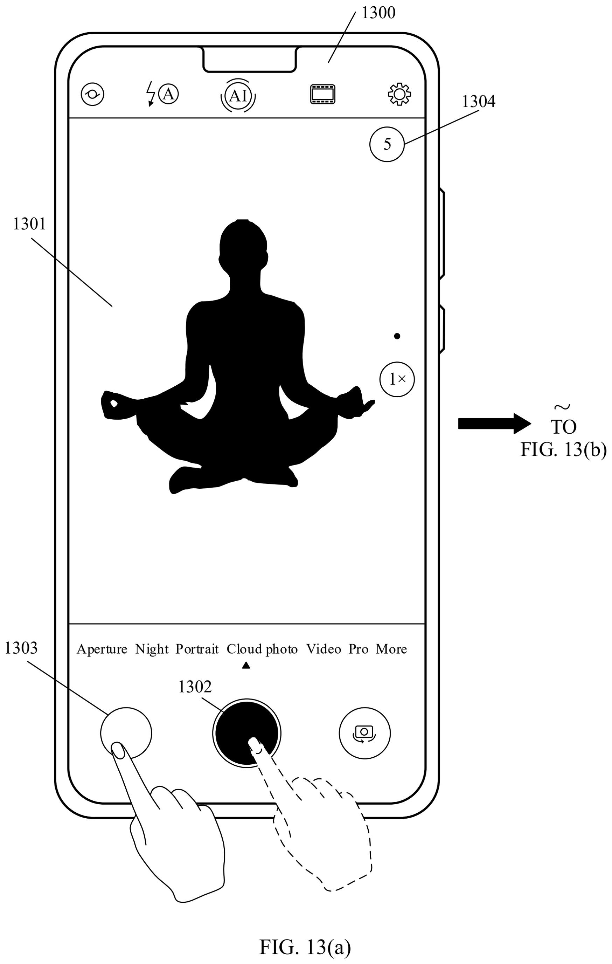

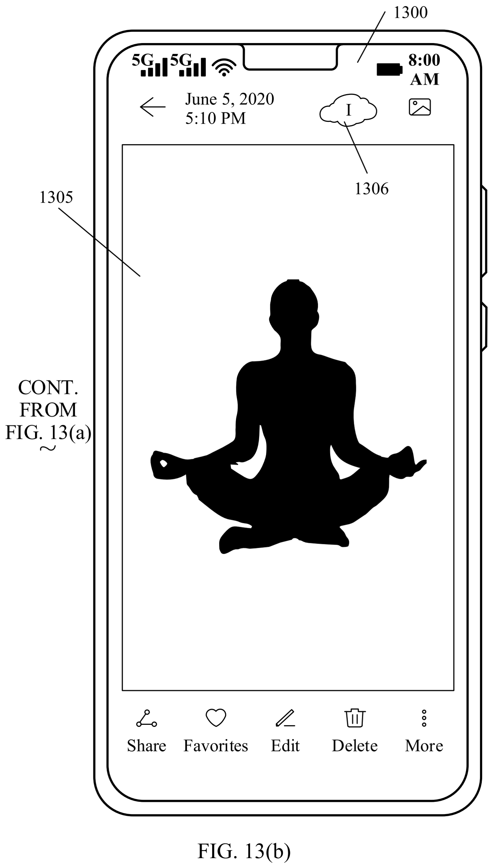

For example, FIG. 13(a) and FIG. 13(b) are a diagram of another photographing interface and a diagram of a display interface of a gallery preview image according to an embodiment of this application.

FIG. 13(a) is the diagram of the another photographing interface according to this embodiment of this application. As shown in FIG. 13(a), an electronic device 1300 is in a photographing interface, a current photographing mode is a cloud photographing mode, and the photographing interface includes at least a preview image 1301, a photographing control 1302, a gallery preview control 1303, and a second cloud enhancement degree selection control 1304. The preview image 1301 may be used by a first terminal device to determine whether to enter a cloud enhancement mode. This corresponds to S701, S801, and S1001. The photographing control 1302 is used by a user to perform a photographing operation. The gallery preview control 1303 is used by the user to switch a display interface of the electronic device 1300 to the display interface of the gallery preview image 1305 (namely, the interface shown in FIG. 13(b)). The second cloud enhancement degree selection control 1304 is used by the user to select a second cloud enhancement degree.

In some embodiments, when the electronic device 1300 determines to enter the cloud enhancement mode, after the user performs the photographing operation by tapping the photographing control 1302, the electronic device 1300 obtains the gallery preview image 1305 through first processing at the local end, and stores the gallery preview image in a gallery. When the user further taps the gallery preview control 1303, the display interface of the electronic device 1300 is switched to the display interface of the gallery preview image 1305 shown in FIG. 13(b). The interface includes at least the gallery preview image 1305, and also includes an icon 1306. The icon 1306 is different from the control 1205 shown in FIG. 12(b), and the icon 1306 is only used to prompt the user that the gallery preview image 1305 corresponds to the cloud enhancement mode.

It should be understood that a difference between this embodiment of this application and the embodiment shown in FIG. 12(a) and FIG. 12(b) lies in that, in this embodiment of this application, the photographing mode is the cloud photographing mode, and in the photographing mode, the user can preferentially perform transmission to cloud without tapping the cloud enhancement icon on the display interface of the gallery preview image.

In some embodiments, when load of the electronic device 1300 is greater than a first load threshold, the transmission to cloud is not started.

In some embodiments, when a temperature of the electronic device 1300 is greater than a first temperature threshold, the transmission to cloud is not started.

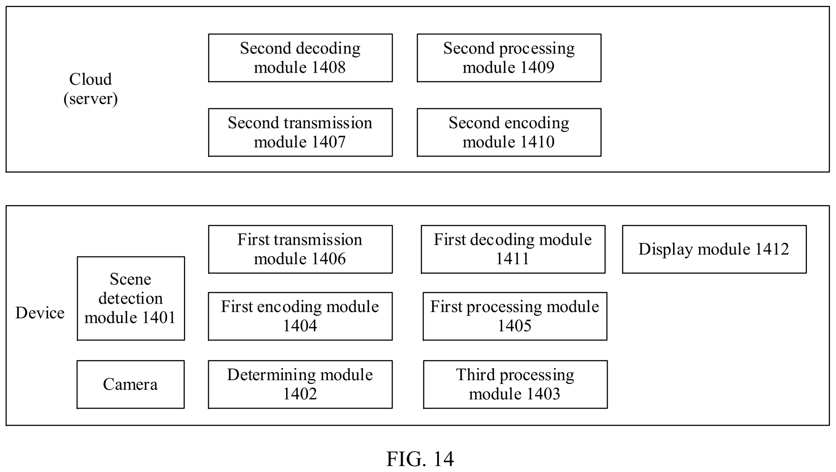

For example, FIG. 14 is a diagram of functional modules of an image processing system 1400 according to an embodiment of this application. As shown in FIG. 14, the system 1400 includes a device and cloud (a server). The device includes a scene detection module 1401, a determining module 1402, a third processing module 1403, a first encoding module 1405, a first processing module 1406, a first transmission module 1407, a first decoding module 1412, and a display module 1413, and the cloud includes a second transmission module 1408, a second decoding module 1409, a second processing module 1410, and a second encoding module 1411.

Specifically, the scene detection module 1401 is configured to detect a current photographing scene of the device.

The determining module 1402 is configured to determine, in response to a second operation of a user and based on a current scene, whether to enter a cloud enhancement mode.

The second operation of the user may be an operation of starting a camera of a first terminal device by the user to enter a photographing interface, or may be a photographing operation of the user, for example, pressing a photographing key by the user.

A specific explanation of "determining, based on the current scene, whether to enter the cloud enhancement mode" has been described in detail in the embodiment shown in FIG. 7A and FIG. 7B. For brevity, details are not described herein again.

The determining module 1402 is further configured to: in response to the second operation of the user, determine, based on the current scene, current load of the first terminal device, and/or a current temperature of the first terminal device, whether to enter the cloud enhancement mode; and when the current load of the first terminal device is greater than a first load threshold and/or the current temperature of the first terminal device is greater than a first temperature threshold, the determining module 1402 determines not to enter the cloud enhancement mode.

The determining module 1402 is further configured to: in response to the second operation of the user, determine, based on the current scene, current load of the first terminal device, and/or a current temperature of the first terminal device, whether to enter the cloud enhancement mode; and when the current load of the first terminal device is less than a first load threshold and/or the current temperature of the first terminal device is less than a first temperature threshold, the determining module 1402 further determines, based on the current scene, whether to enter the cloud enhancement mode.

The third processing module 1403 is configured to: when it is determined not to enter the cloud enhancement mode, perform third processing on a first image to obtain a fourth image, and store the fourth image in a gallery.

The third processing means that an ISP module and another post-processing module of the first terminal device process the first image, and may include, for example, multi-frame noise reduction, multi-frame HDR, and wide-aperture blurring on the first image.

Alternatively, the third processing module 1403 is configured to: when the encoded second image sent by the server is not received within a first time threshold, perform third processing on a first image to obtain a fourth image, and store the fourth image in a gallery, where a timing start moment of the first time threshold is a moment at which the device side sends a first encoded file to the server.

For example, the first time threshold may be any time between 12 hours and 48 hours, for example, 24 hours.

The first encoding module 1404 is configured to: after the determining module 1402 determines to enter the cloud enhancement mode, encode, in response to the photographing operation of the user, the first image captured through the camera and first information related to the first image, to obtain the first encoded file.

The cloud enhancement mode is a mode in which a currently photographed image needs to be processed by the cloud.

The first information related to the first image is metadata corresponding to the first image, and the first information related to the first image may include one or more of an exposure parameter, an image size, collected device information, scene information, and photographing mode information, that are used to describe the first image. In addition, the first information related to the first image may further include other information used to describe the first image. This is not limited in this application.

It should be understood that there may be one or more captured and encoded first images. A specific quantity may be determined based on the current scene, and quantities of first images captured and encoded in different scenes may also be different.

In an example, a quantity of first images captured and encoded (which may also be understood as a quantity of frames of captured and encoded first images) in a scene with insufficient light (namely, a low-brightness scene) is greater than that in a scene with sufficient light.

In another example, a plurality of first images of different exposure types may be captured and encoded in a high dynamic scene.

In still another example, in a wide-aperture photographing mode or another scene in which data of a plurality of cameras is required, a plurality of first images are captured through the plurality of cameras and encoded.

The system 1400 may further include a storage module, configured to store the first encoded file.

The first processing module 1405 is configured to perform first processing on the first image, to obtain a gallery preview image corresponding to the first image.

The first processing may be preprocessing the first image, storing the gallery preview image corresponding to the first image in the gallery of the device, and presenting the gallery preview image to the user when the user enters the gallery to browse an image.

In some embodiments, on an interface on which the user browses the gallery preview image, the gallery preview image is associated with a first control, and the first control is used by the user to perform an operation of starting cloud transmission.

In some embodiments, the gallery preview image is further associated with a second control, the second control is used by the user to select a second cloud enhancement degree, and this second cloud enhancement is portrait enhancement based on first cloud enhancement.

In an implementation, the first control may be an icon of the cloud transmission. When the user taps the first control, the cloud transmission is started, and the user may pause the cloud transmission by tapping the first control again.

In an implementation, the first cloud enhancement is overall cloud enhancement on the first image, and may be, for example, noise reduction processing, high dynamic processing, or wide-aperture blurring processing performed on the first image by the cloud. The second cloud enhancement degree may be, for example, a degree of further portrait enhancement based on an image obtained through the first cloud enhancement processing. The second cloud enhancement degree may be represented by a level, and may be represented by, for example, a level 0 to a level 10. A larger number indicates a higher cloud enhancement degree.

That the first processing module 1405 performs first processing on the first image may be performing only some simple ISP processing on the first image to obtain a corresponding YUV image, and then directly converting the YUV image into a preview image in an RGB format for displaying on a gallery preview interface.

The first transmission module 1406 is configured to send the first encoded file to the server in response to an operation of confirming transmission to cloud by the user and/or when the device meets a condition of the transmission to cloud.

In some embodiments, the first transmission module 1406 is further configured to send a second encoded file to the server. The second encoded file may include information indicating the second cloud enhancement degree selected by the user, and may further include an intermediate result of algorithm processing corresponding to the first image, for example, a preview YUV image before and after photographing and a JPG image obtained through algorithm processing on the first image.

The first encoded file and the second encoded file may be separately sent, or may be sent in a package.

An explanation of the "operation of confirming transmission to cloud by the user" and an explanation of the "condition of the transmission to cloud" have been described in detail in the embodiment shown in FIG. 6. For brevity, details are not described herein again.

The second transmission module 1407 is configured to receive the first encoded file sent by the device.

In some embodiments, the second transmission module 1407 is further configured to receive the second encoded file sent by the device.

The second decoding module 1408 is configured to decode the first encoded file to obtain the first image and the first information related to the first image.

In some embodiments, the second decoding module 1408 is further configured to decode the second encoded file to obtain the information indicating the second cloud enhancement degree selected by the user and/or the intermediate result of the algorithm processing corresponding to the first image, for example, the preview YUV image before and after photographing and the JPG image obtained through algorithm processing on the first image.

The second processing module 1409 is configured to perform second processing on the first image based on the first information related to the first image, to obtain the second image.

An explanation of "performing second processing on the first image" have been described in detail in the embodiment shown in FIG. 6. For brevity, details are not described herein again.

The second encoding module 1410 is configured to encode the second image.

A format of the encoded second image depends on a format supported by the device. Generally, the format of the encoded second image is a JPEG format.

The second transmission module 1407 is further configured to send the encoded second image to the device.

The first transmission module 1406 is further configured to receive the encoded second image sent by the server.

The first decoding module 1411 is configured to decode the encoded second image to obtain the second image.

The display module 1412 is configured to display the second image to the user on the device.

In this embodiment of this application, when the cloud enhancement processing needs to be performed on the image captured by the terminal device, the transmission to cloud is not immediately started after the image is captured, and is started in response to an operation of confirming the transmission to cloud by the user, or the transmission to cloud is automatically started when the current load, the current temperature, and a current network condition of the terminal device meet a condition of the transmission to cloud. In this way, the transmission to cloud in a case in which the terminal device is heavily loaded or overheated, or is in a poor network condition can be avoided, so that cases such as excessively high load and overheating caused by the transmission to cloud of the terminal device can be avoided, and a failure of the transmission to cloud due to the poor network condition can also be avoided. This improves load balance in a process of using the terminal device, and increases a success rate of the transmission to cloud in the process of using the terminal device.

In addition, in a scenario in which cloud enhancement is performed on the captured image, the terminal device does not perform a series of complex processing on the captured image at the local end, and generates the gallery preview image through simple preprocessing for the user to browse. This can also reduce power consumption overheads of the terminal device to some extent.

One or more of the modules or units described in this specification may be implemented by software, hardware, or a combination thereof. When any one of the foregoing modules or units is implemented by software, the software exists in a form of a computer program instruction, and is stored in a memory. A processor may be configured to execute the program instruction and implement the foregoing method procedure. The processor may include but is not limited to, at least one of a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform calculation or processing. The processor may be built in a SoC (system on a chip) or an application-specific integrated circuit (application specific integrated circuit, ASIC), or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements dedicated logic calculation.

When the foregoing modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to perform the foregoing method procedure.

When the modules or units described in this specification are implemented by software, all or some of the modules or units may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and method steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for ease and brevity of description, for a detailed working process of foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image processing method, wherein the method comprises:
in response to an operation of capturing a first image by a user via a first terminal device, encoding the first image to obtain a first encoded file;
sending the first encoded file to a server when a first operation of the user is detected and/or the first terminal device meets a first condition; and
receiving a second image sent by the server, wherein the second image is obtained by the server by performing cloud enhancement processing on the first image in the first encoded file.

2. The method according to claim 1, wherein the first condition comprises any one or more of the following conditions:
current load of the first terminal device is less than a first load threshold, a current temperature of the first terminal device is less than a first temperature threshold, and a current network signal of the first terminal device is greater than a first signal threshold.

3. The method according to claim 1 or 2, wherein before sending the first encoded file to the server, the method further comprises:
displaying a first interface on a display of the first terminal device in response to a second operation of the user, wherein the first interface comprises a first preview image and a first icon, and the first preview image is a gallery preview image corresponding to the first image; and
the first operation of the user comprises an operation of tapping the first icon by the user.

4. The method according to claim 3, wherein the first interface further comprises a first selection control, and the method further comprises:
when the user selects a first enhancement degree via the first selection control, first information is carried in the first encoded file, wherein the first information indicates that a degree of portrait enhancement performed by the server on the first image is the first enhancement degree, and the cloud enhancement processing comprises the portrait enhancement.

5. The method according to any one of claims 1 to 4, wherein in response to the operation of capturing the first image by the user via the first terminal device, encoding the first image to obtain the first encoded file comprises:
determining, based on a current photographing scene, whether to enter a cloud enhancement mode, wherein the server needs to perform cloud enhancement processing on the first image in the cloud enhancement mode; and
when it is determined to enter the cloud enhancement mode, in response to the operation of capturing the first image by the user via the first terminal device, encoding the first image to obtain the first encoded file.

6. The method according to claim 5, wherein determining, based on the current photographing scene, whether to enter the cloud enhancement mode comprises:
determining, based on the current photographing scene and the current load of the first terminal device and/or the current temperature of the first terminal device, whether to enter the cloud enhancement mode; and
when the current load of the first terminal device is greater than the first load threshold and/or the current temperature of the first terminal device is greater than the first temperature threshold, determining not to enter the cloud enhancement mode.

7. The method according to claim 5 or 6, wherein determining, based on the current photographing scene, whether to enter the cloud enhancement mode comprises:
obtaining a preview image corresponding to the current photographing scene; and
when it is detected that a first portrait exists in the preview image and the first portrait meets a second condition, determining to enter the cloud enhancement mode.

8. The method according to claim 7, wherein an area ratio of the first portrait in the preview image is greater than a first area ratio and less than a second area ratio.

9. The method according to claim 5 or 6, wherein determining, based on the current photographing scene, whether to enter the cloud enhancement mode comprises:
obtaining a preview image corresponding to the current photographing scene; and
when it is determined, based on the preview image, that the current scene is a high dynamic scene, determining to enter the cloud enhancement mode; or
when it is determined, based on the preview image, that brightness of the current scene is less than first brightness, determining to enter the cloud enhancement mode.

10. The method according to any one of claims 1 to 4, wherein in response to the operation of capturing the first image by the user via the first terminal device, encoding the first image to obtain the first encoded file further comprises:
when it is detected that a current photographing mode is a cloud camera mode, a portrait mode, or a wide-aperture mode, in response to the operation of capturing the first image by the user via the first terminal device, encoding the first image to obtain the first encoded file.

11. The method according to any one of claims 1 to 4, wherein in response to the operation of capturing the first image by the user via the first terminal device, encoding the first image to obtain the first encoded file further comprises:
when it is detected that a current photographing mode is a cloud camera mode, a portrait mode, or a wide-aperture mode, the current load of the first terminal device is less than the first load threshold, and the current temperature of the first terminal device is less than the first temperature threshold, in response to the operation of capturing the first image by the user via the first terminal device, encoding the first image to obtain the first encoded file.

12. The method according to any one of claims 1 to 11, wherein the method further comprises:
if the second image sent by the server is not received within a first time threshold, decoding the first encoded file to obtain the first image; and
performing third processing on the first image to obtain a fourth image, wherein a timing start moment of the first time threshold is a moment at which the first encoded file is sent to the server, and the third processing comprises image signal processor ISP processing and post-processing.

13. The method according to claim 5 or 6, wherein the method further comprises:
when determining not to enter the cloud enhancement mode, in response to the operation of capturing the first image by the user via the first terminal device, performing third processing on the first image to obtain a fourth image, wherein the third processing comprises image signal processor ISP processing and post-processing.

14. The method according to any one of claims 1 to 13, wherein the method further comprises:
sending a request message to the server, wherein the request message is used to request to obtain a target image stored in the server; and
receiving an image that is sent by the server and that is obtained by adjusting the target image based on device information of the first terminal device.

15. The method according to any one of claims 1 to 14, wherein the first image comprises a raw image.

16. An electronic device, comprising:
one or more processors,
one or more memories, and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 15.

17. A computer-readable storage medium, wherein the storage medium stores a program or instructions, and when the program or the instructions are run, the method according to any one of claims 1 to 15 is implemented.

18. A chip, wherein the chip stores instructions, and when the instructions are run, the method according to any one of claims 1 to 15 is implemented.
